(19) Europäisches Patentamt
European Patent Office
Office européen des brevets

(11) **EP 1 267 535 B1**

(12) **EUROPEAN PATENT SPECIFICATION**

(45) Date of publication and mention
of the grant of the patent:
**11.04.2007 Bulletin 2007/15**

(51) Int Cl.:
*H04L 27/26* *(2006.01)*     *H04L 25/02* *(2006.01)*

(21) Application number: **01130708.9**

(22) Date of filing: **21.12.2001**

(54) **Method and apparatus for symbol synchronisation in a multicarrier receiver**

Verfahren und vorrichtung für Symboltaktsynchronisierung in einem Mehrträgerempfänger

Procédé et apparaeil de synchronisation de l'horloge de symboles dans un récepteur multiporteuse

(84) Designated Contracting States:
**DE FR GB**

(30) Priority: **11.06.2001 KR 2001032495**

(43) Date of publication of application:
**18.12.2002 Bulletin 2002/51**

(73) Proprietor: **SAMSUNG ELECTRONICS CO. LTD.**
**Kyungki-do,**
**Seoul (KR)**

(72) Inventors:
• **Ryu, Young-jae**
**Taegu (KR)**
• **Han, Dong-suk**
**Suseong-gu,**
**Taegu (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 840 485**     **GB-A- 2 334 836**

• SPETH M ET AL: "Broadband transmission using OFDM: system performance and receiver complexity" BROADBAND COMMUNICATIONS, 1998. ACCESSING, TRANSMISSION, NETWORKING. PROCEEDINGS. 1998 INTERNATIONAL ZURICH SEMINAR ON ZURICH, SWITZERLAND 17-19 FEB. 1998, NEW YORK, NY, USA,IEEE, US, 17 February 1998 (1998-02-17), pages 99-104, XP010277003 ISBN: 0-7803-3893-6
• KIM Y-J ET AL: "A NEW FAST SYMBOL TIMING RECOVERY ALGORITHM FOR OFDM SYSTEMS" IEEE TRANSACTIONS ON CONSUMER ELECTRONICS, IEEE INC. NEW YORK, US, vol. 44, no. 3, August 1998 (1998-08), pages 1134-1141, XP000851631 ISSN: 0098-3063
• PALIN A ET AL: "Symbol synchronization in OFDM system for time selective channel conditions" ELECTRONICS, CIRCUITS AND SYSTEMS, 1999. PROCEEDINGS OF ICECS '99. THE 6TH IEEE INTERNATIONAL CONFERENCE ON PAFOS, CYPRUS 5-8 SEPT. 1999, PISCATAWAY, NJ, USA,IEEE, US, 5 September 1999 (1999-09-05), pages 1581-1584, XP010361802 ISBN: 0-7803-5682-9

**EP 1 267 535 B1**

**Description**

The present invention relates to an orthogonal frequency division multiplex (OFDM) receiving system, and more particularly, to an OFDM receiving system for estimating a symbol timing offset with less influence by a channel with a small amount of calculation, and a method for the same.

Generally, OFDM transmitting systems transmit information over a subcarrier using fast Fourier transform (FFT) and add a guard interval to the front portion of a useful symbol in order to reduce the influence of a multi-path. OFDM receiving systems find the boundary between a guard interval and a useful symbol interval in a received OFDM signal and perform FFT window timing synchronization in order to perform FFT with respect to only a useful symbol. For this, OFDM receiving systems roughly find an FFT interval using the similarity between the guard interval and the useful symbol. Here, when a channel is poor, an error may occur during rough estimation of an FFT start point. Here, a remaining offset is referred to as a fine FFT window timing offset. In addition, OFDM receiving systems estimate the frequency and phase offset of an analog-to-digital converter sampling clock signal. A fine FFT window timing offset and the offset of a sampling clock signal can be estimated from a phase difference in a received signal after performing FFT.

In a conventional symbol timing synchronizing algorithm, scattered pilots are extracted from a received signal, the phase difference between two adjacent scattered pilots is obtained, and an average of phase difference information output as many times as the number of scattered pilots during a single symbol period is obtained, thereby measuring the offset of a fine FFT window and the offset of a sampling clock signal.

However, when the conventional symbol timing synchronization algorithm is applied to a Rayleigh channel which is a poor multi-path channel not having a main path, it is difficult to estimate an accurate symbol timing offset due to distortion of a scattered pilot used for estimating a timing offset even if a received signal does not have noise.

To solve the above problems, it is the object of the present invention to provide an orthogonal frequency division multiplex (OFDM) receiving system for estimating a symbol timing offset insensitive to the influence of a channel with a small amount of calculation by separately accumulating real parts and imaginary parts in phase difference information, and a method for the same.

To achieve the above object of the invention, there is provided a method of estimating a symbol timing offset in an OFDM receiving system. The method includes extracting a scattered pilot, which is inserted into a symbol at regular sample intervals, from a received OFDM signal, multiplying the current extracted scattered pilot by a known scattered pilot pattern to obtain a complex number of the current scattered pilot, multiplying the complex number of the current scattered pilot by a complex number of a previous scattered pilot and separately accumulating real parts and imaginary parts of the results of the multiplication of complex numbers during a predetermined symbol period, and estimating a phase using an accumulation of real parts and an accumulation of imaginary parts and estimating a timing offset for controlling a fast Fourier transform (FFT) start point and a sampling clock signal.

There is also provided an OFDM receiving system for performing FFT on a symbol composed of a useful data sample and a guard interval. The OFDM receiving system includes an analog-to-digital converter for converting an OFDM signal into digital complex samples, an FFT window controller for removing guard interval samples from the digital complex samples output from the analog-to-digital converter to output useful data samples, an FFT operation unit for performing FFT on the useful data samples output from the FFT window controller, a scattered pilot extractor for extracting a scattered pilot from a sample output from the FFT operating unit; and a timing offset estimator for complex-multiplying a complex number of the scattered pilot extracted by the scattered pilot extractor by a delayed complex number of a previous scattered pilot, separately accumulating real parts and imaginary parts of the results of complex multiplication during a single symbol period, and estimating a useful data sample start timing offset for the FFT window controller using an accumulation of real parts and a timing offset of a sampling clock signal of the analog-to-digital converter using an accumulation of imaginary parts.

The above object and advantages of the present invention will become more apparent by describing in detail preferred embodiments thereof with reference to the attached drawings in which:

FIG. 1 is a block diagram of an orthogonal frequency division multiplex (OFDM) receiving system for efficiently estimating a symbol timing offset according to the present invention;

FIG. 2 is a flowchart of a method of estimating a symbol timing offset according to the present invention;

FIGS. 3A and 3B are graphs of the relation between an actual timing offset and an estimated timing offset in a Rayleigh channel having no noise and no frequency offset in a conventional method and a method of the present invention, respectively;

FIG. 4 is a graph of the characteristics of a conventional method and a method of the present invention with respect to a Rayleigh channel; and

FIG. 5 is a graph showing the symbol error rate of a signal output from an equalizer after timing synchronization has been accomplished with respect to each channel according to a conventional method and a method of the present invention.

Hereinafter, embodiments of the present invention will be described with reference to the attached drawings.

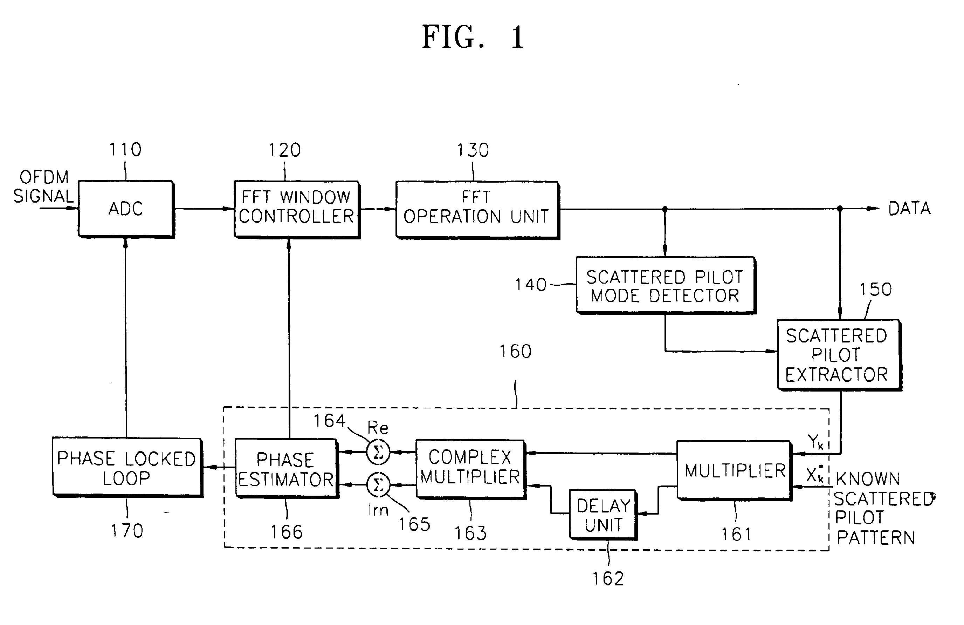

FIG. 1 is a block diagram of an orthogonal frequency division multiplex (OFDM) receiving system for efficiently estimating a symbol timing offset according to the present invention. The OFDM receiving system of FIG. 1 includes an analog-to-digital converter (ADC) 110, a fast Fourier transform (FFT) window controller 120, an FFT operation unit 130, a scattered pilot mode detector 140, a scattered pilot extractor 150, a timing offset estimator 160, and a phase locked loop 170. The timing offset estimator 160 includes a multiplier 161, a delay unit 162, a complex multiplier 163, a real accumulator 164, an imaginary accumulator 165, and a phase estimator 166.

The ADC 110 converts an OFDM signal into digital complex samples having a sample rate of 9.14 MHz.

The FFT window controller 120 receives digital complex samples output from the ADC 110, identifies two types of transmission mode and four types of guard interval mode using the guard interval, and finds the boundary between the guard interval and a useful symbol interval. Also, the FFT window controller 120 eliminates the guard interval from a time-based signal composed of the guard interval and the useful symbol interval using information about the length of the guard interval and the start point of the useful symbol interval, and outputs only the useful symbol interval to the FFT operation unit 130.

The FFT operation unit 130 performs FFT with respect to samples corresponding to the useful symbol interval output from the FFT window controller 120, and outputs a frequency domain signal. This frequency domain signal includes a scattered pilot signal containing information necessary for OFDM transmission in addition to general data. Scattered pilot signals which have been inserted into each symbol of the frequency domain signal at intervals of 12 samples are necessary for symbol timing synchronization.

A scattered pilot signal is also used to understand the influence of a channel on a frequency domain. Pilots are alternately disposed between two adjacent symbols, and differences in a pilot position between the symbols are compensated for, so that the influence of a channel on every subcarrier can be understood approximately. Here, a start subcarrier number of a scattered pilot is different depending on symbols. There are four types of scattered pilot start mode, i.e., 0, 3, 6, and 9, depending on subcarrier numbers, and a scattered pilot start mode is repeated every four symbols. Accordingly, the scattered pilot start mode of a current symbol should be decided before extracting scattered pilots. The scattered pilot detector 140 decides the mode of each scattered pilot and compares the sums of powers of subcarriers corresponding to each scattered pilot mode with one another based on the feature that a pilot has greater power than usual data to detect a mode having greatest power among the four modes.

The scattered pilot extractor 150 extracts scattered pilots which have been inserted into a symbol using a scattered pilot start mode detected by the scattered pilot mode detector 140. Here, the phase of each scattered pilot rotates and deviates from an original phase due to a symbol timing offset. The original phase of each scattered pilot is 0° or 180° depending on the sign of a real part which is determined according to the sign of pseudo noise. Accordingly, it is necessary to know the sign of a known scattered pilot pattern between a transmitting system and a receiving system in order to know the phase rotation of a received, scattered pilot. When subcarrier numbers are the same, the signs of pseudo noise multiplied by each subcarrier are the same regardless of a symbol number.

The multiplier 161 multiplies a received scattered pilot $Y_k$ by the sign of a known scattered pilot pattern $X^*_k$ to obtain the degree of the phase rotation of each scattered pilot. Here, since the phase of each scattered pilot is repeated at intervals of $2\pi$, a symbol timing offset cannot be estimated from the degree of phase rotation of only one scattered pilot. Accordingly, it is necessary to obtain a difference in the degree of phase rotation between two adjacent scattered pilots in order to obtain the degree of phase rotation between subcarriers occurring due to a symbol timing offset. The delay unit 162 delays a single scattered pilot. The complex multiplier 163 complex-multiplies a scattered pilot output from the multiplier 161 and a scattered pilot delayed by one pilot by the delay unit 162. Accordingly, the complex multiplier 163 outputs a single complex number having a magnitude equal to the product of the magnitudes of the two scattered pilots and having a phase equal to the phase difference between the two scattered pilots.

In a conventional symbol timing offset estimating method, phases of the results of complex multiplication during a single symbol period are averaged. Accordingly, in the case of an additive white Gaussian noise (AWGN) channel having only noise or a Ricean channel little influenced by a multi-path, distortion due to a channel is not serious, so distortion of a scattered pilot used for estimating a symbol timing offset is not serious and a problem does not occur in symbol timing synchronization.

However, a Rayleigh channel in which a signal of a main path does not exist and only a signal of a multi-path exists has large influence on the magnitude and phase of a scattered pilot falling under a particular frequency domain. Here, even if only a single scattered pilot among all scattered pilots is distorted, a timing offset estimate value near 0 is largely influenced.

The present invention reduces the influence of scattered pilots, which are seriously influenced by the distortion of a channel, on entire timing offset estimation. Generally, the magnitude of a signal in a frequency domain in which distortion occurs due to the influence of a channel is attenuated very much compared to a transmitted signal, and the result of the complex multiplier 163 measuring the phase difference between scattered pilots is much less than that measured when channel distortion does not occur. Accordingly, the real accumulator 164 and the imaginary accumulator 165 accumulate real parts and imaginary parts, respectively, during a single symbol period, instead of immediately converting the output of the complex multiplier 163 into a phase. Here, when the influence of a channel is very small, the real accumulator 164 and the imaginary accumulator 165 accumulate almost the same real numbers and almost the same imaginary numbers, respectively, every complex multiplication. However, when distortion of a channel occurs, a complex magnitude becomes very small. Accordingly, the magnitude of a complex product with respect to distorted scattered pilots is very small, which scarcely influences the accumulation. As distortion of a frequency range becomes serious, the value of a real part and the value of an imaginary part become smaller so that symbol timing offset estimation according to the present invention is resistant to channel distortion. Here, when the present invention focuses on performance rather than the amount of calculation, a complex magnitude output from the complex multiplier 163 may not be accumulated when the complex magnitude is no greater than a predetermined value. In this case, additional calculation for determining the magnitude of a complex product is required, but performance can be improved because a complex product including serious distortion is not used in the accumulation.

The phase estimator 166 estimates a phase using the value of an accumulation of real parts and the value of an accumulation of imaginary parts during a single symbol period, which has the same effect as if scattered pilots having serious distortion are excluded when obtaining an average value used for timing offset estimation.

From the estimated phase, a symbol timing offset corresponding to an integer part and a symbol timing offset corresponding to a decimal part can be obtained. Here, the integer part denotes an FFT window timing offset and is applied to the FFT window controller 120 to change an FFT start point. The decimal part denotes a timing offset of a sampling clock signal and is applied to the phase locked loop 170 to change the frequency and phase of a sampling clock signal of the ADC 110.

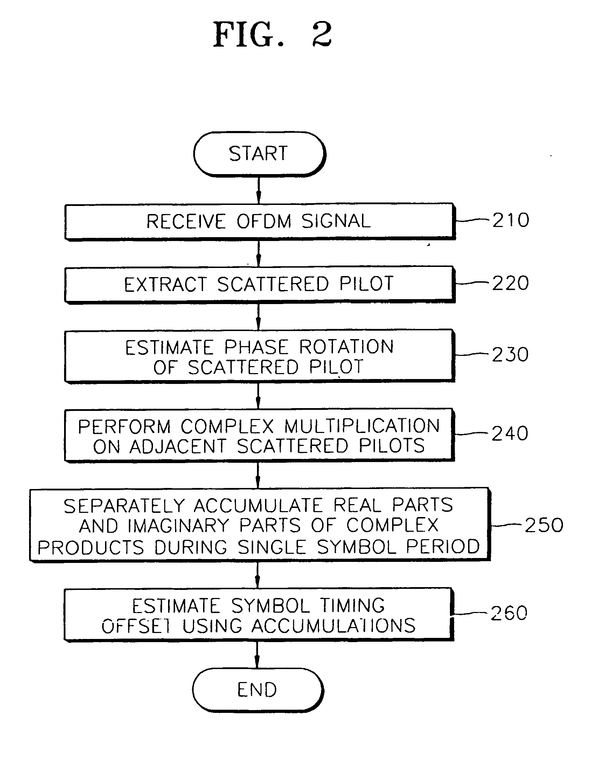

FIG. 2 is a flowchart of a method of estimating a symbol timing offset according to the present invention. In step 210, an OFDM signal composed of symbols consisting of a guard interval and a useful interval is received from a transmitting system. Equation (1) expresses a received signal considering a timing offset with respect to a phase rotation.

$$Y_j(k) = X_j(k) \cdot e^{\frac{j2\pi k}{N} \times (\delta_{FFT} + \delta_{clock})} \qquad \ldots(1)$$

Here, $Y_j(k)$ and $X_j(k)$ denote a received signal and a transmitted signal, respectively, of a $k$-th subcarrier of a $j$-th symbol, $N$ denotes an entire subcarrier, and $\delta_{FFT}$ and $\delta_{clock}$ denote an FFT window offset and an offset of a sampling clock signal, respectively. Since compensation values for $\delta_{FFT}$ and $\delta_{clock}$ are determined with respect to each symbol, the phase rotation of a received signal in a single symbol is determined only by $k$, i.e., a subcarrier number.

In Equation (1), the phase of $Y_j(k)$ can be obtained by measuring the received signal. The phase of $X_j(k)$ is 0° or 180° and can be easily obtained from the sign of a pilot. Since $N$, the magnitude of FFT, is predetermined, a timing offset can be estimated using only information about $k$. A phase rotation is obtained using the phase difference between two subcarriers instead of using only one subcarrier. Accordingly, in order to obtain a phase rotation, scattered pilots which are inserted into the received signal at regular sample intervals and which are necessary to know the phase of $X_j(k)$ are extracted from the received signal in step 220.

Next, in step 230, the phase rotation of one scattered pilot is estimated by multiplying a received scattered pilot and a known transmitted scattered pilot, as shown in Equation (2).

$$\varphi_j(k') = Y_j(k') \; X_j^*(k') \qquad \ldots(2)$$

Here, $k'$ denotes a subcarrier number corresponding to the position of a scattered pilot, and $\varphi_j(k')$ denotes a complex number containing phase rotation information about a $k'$-th scattered pilot.

Next, complex multiplication is performed on adjacent scattered pilots in step 240.

Next, real parts and imaginary parts of the results of complex multiplication during a single symbol period are separately accumulated in step 250.

Next, the phase is estimated using the value of an accumulation of real parts and the value of an accumulation of imaginary parts, as shown in Equation (3), and used as a symbol timing offset for controlling an FFT start point and the timing of a sampling clock signal in step 260.

$$\tan^{-1}\left\{\dfrac{\displaystyle\sum_{i=1}^{L-1}\mathrm{Re}\{\varphi_j(k_i')\cdot\varphi_j^*(k_{i+1}')\}}{\displaystyle\sum_{i=1}^{L-1}\mathrm{Im}\{\varphi_j(k_i')\cdot\varphi_j^*(k_{i+1}')\}}\right\}=\dfrac{2\pi\Delta k}{N}\times\{\delta_{FFT}+\delta_{clock})\qquad\ldots(3)$$

Here, $i$ denotes a scattered pilot number, $L$ denotes a total of scattered pilots, and $\Delta k$ denotes a sample interval of a scattered pilot, i.e., 12.

Referring to Equation (3), when there is no channel distortion, the same real numbers and the same imaginary numbers are accumulated with respect to each scattered pilot. However, when a scattered pilot is influenced by channel distortion, a complex number having a small magnitude and a distorted phase is accumulated. The magnitude of an accumulated complex number becomes smaller as channel distortion becomes more serious. Accordingly, the influence of channel distortion on a multi-path can be greatly reduced.

$$\begin{cases}\left|\varphi_j(k_i')\cdot\varphi_j^*(k_{i+1}')\right|\geq threshold, & included\ in\ accumulation\\[2mm]\left|\varphi_j(k_i')\cdot\varphi_j^*(k_{i+1}')\right|\leq threshold, & excluded\ from\ accumulation\end{cases}\qquad\ldots(4)$$

As shown in Equation (4), when the magnitude of a complex product does not exceed a threshold value, the real part and imaginary part of the complex product may be excluded from accumulation. In this case, since the magnitude of a complex product should be estimated, the amount of calculation increases very much. However, a scattered pilot having serious distortion is completely excluded from timing offset estimation, thereby improving performance.

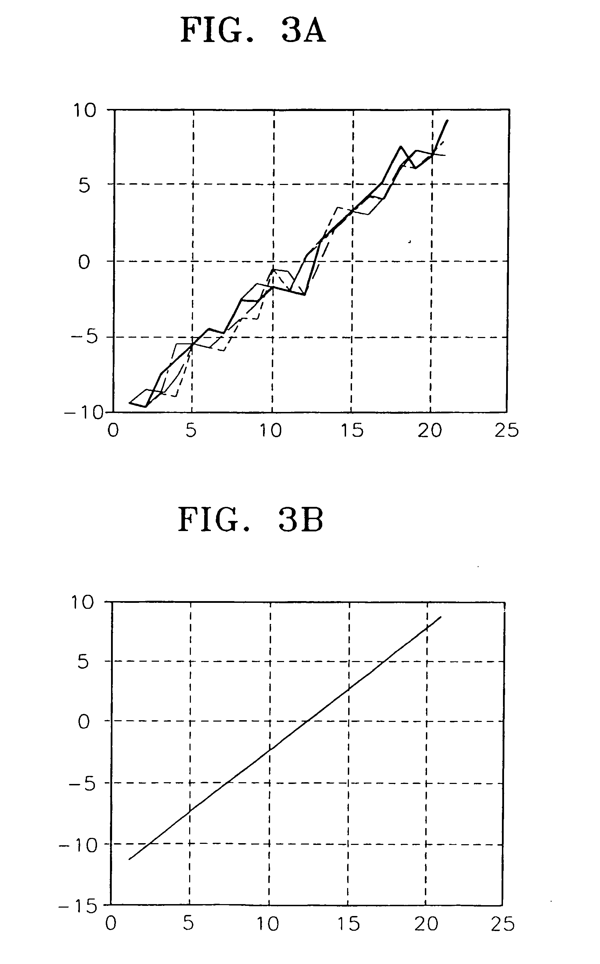

FIGS. 3A and 3B are graphs of the relation between an actual timing offset and an estimated timing offset in a Rayleigh channel having no noise and no frequency offset in a conventional method and a method of the present invention, respectively. While the same results were obtained at every simulation according to the present invention, as shown in FIG. 3B, different results were obtained at every simulation according to a conventional method, as shown in FIG. 3A. Accordingly, the conventional method cannot achieve synchronization with respect to a Rayleigh channel.

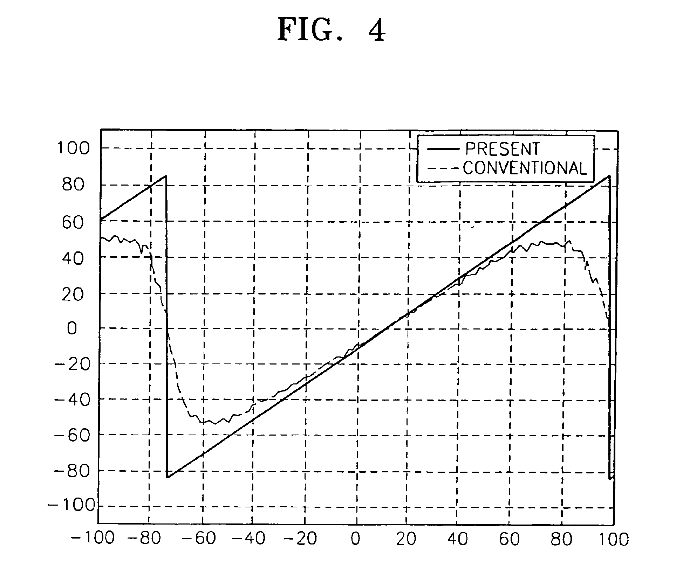

FIG. 4 is a graph of the characteristics of a conventional method and a method of the present invention with respect to a Rayleigh channel. The method of the present invention is superior to the conventional method in terms of linearity and the range of estimation.

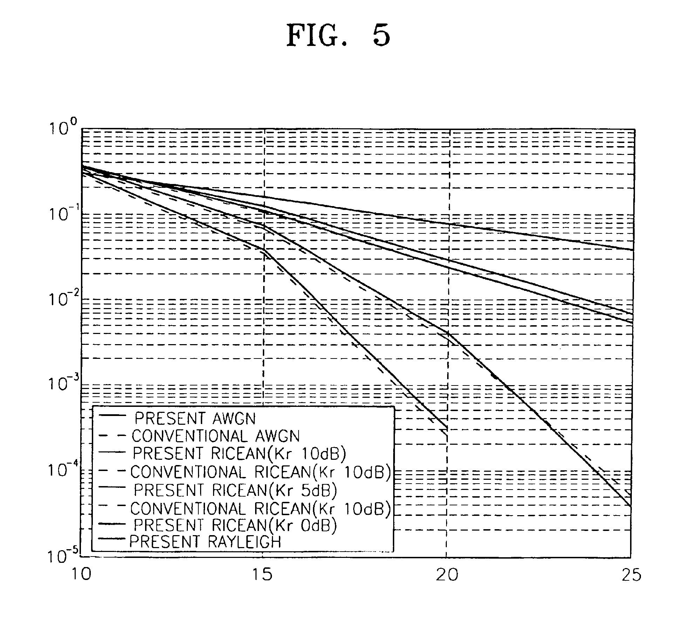

FIG. 5 is a graph showing the symbol error rate of a signal output from an equalizer after timing synchronization has been accomplished with respect to each channel according to a conventional method and a method of the present invention. Here, a symbol does not denote a frequency domain symbol composed of 2048 samples but denotes a single frequency domain sample including pure data other than a guard interval and a pilot signal among the 2048 frequency domain samples. In FIG. 5, with respect to an additive white Gaussian noise (AWGN) channel having no multi-path or Ricean channels of Kr=10 dB and Kr=5dB having a weak multi-path, the results of the present invention are similar to those of the conventional method. However, with respect to a Ricean channel of Kr=0 dB or a Rayleigh channel having a strong multi-path, synchronization could not be acquired when a conventional symbol timing offset estimation method was used, so only symbol error rates according to the present invention are illustrated.

According to the present invention, a symbol timing offset is estimated by separately accumulating real parts and imaginary parts of phase rotation information, thereby further reducing the influence of a scattered pilot more influenced by a channel when estimating a symbol timing offset. In addition, the present invention shows excellent performance with respect to a multi-path channel with a smaller amount of calculation than in a conventional offset estimation method and can acquire synchronization for a Rayleigh channel for which synchronization cannot be acquired by a conventional method.

The present invention is not restricted to the embodiments described above, and it will be understood by those skilled in the art that various changes in form and details may be made therein. In other words, the present invention can be applied to European type digital TV, wireless LANs according to IEEE 802.11a and other systems using OFDM.

An embodiment of the present invention can be realized as a program which can be executed in a computer. The program can be read from a medium used in a computer and executed by the computer. The medium may be a storage medium such as a magnetic storage medium (for example, a ROM, a floppy disc, or a hard disc), an optical readable medium (for example, a CD-ROM or a DVD), or a carrier wave (for example, transmission through the Internet). In addition, the program can be distributively stored in computer readable recording media in computer systems connected through a network and can be executed.

## Claims

1. A method of estimating a symbol timing offset in an orthogonal frequency division multiplex OFDM receiving system, the method comprising the steps of:

   extracting a scattered pilot, which is inserted into a symbol at regular sample intervals, from a received OFDM signal; the method being **characterised by**
   multiplying the current extracted scattered pilot by the sign of a known scattered pilot pattern to obtain a complex number of the current scattered pilot;
   multiplying the complex number of the current scattered pilot by a complex number of a previous scattered pilot and separately accumulating real parts and imaginary parts of the results of the multiplication of complex numbers during a predetermined symbol period; and
   estimating a phase using an accumulation of real parts and an accumulation of imaginary parts and estimating a timing offset for controlling a fast Fourier transform, FFT, start point using the accumulated real parts and a sampling clock signal using the accumulated imaginary parts.

2. The method of claim 1, wherein the complex signal of the current scattered pilot is calculated from $Y_j(k').X^*_j(k')$, in which $k'$ denotes a subcarrier number corresponding to the position of the scattered pilot, $Y_j(k')$ denotes a received signal of a k-th subcarrier of a $j$-th symbol, and $X^*_j(k')$ denotes a transmitted signal of the k-th subcarrier of the $j$-th symbol.

3. The method of claim 1 or 2, wherein the phase is estimated by $\tan^{-1}\left\{ \dfrac{\sum\limits_{i=1}^{L-1} \text{Re}\{\varphi_j(k'_i) \cdot \varphi^*_j(k'_{i+1})\}}{\sum\limits_{i=1}^{L-1} \text{Im}\{\varphi_j(k'_i) \cdot \varphi^*_j(k'_{i+1})\}} \right\}$, in which

   $\varphi_j(k'_i)$ denotes a complex number containing phase rotation information about a $k'$-th scattered pilot, $i$ denotes a scattered pilot number, $L$ denotes a total of scattered pilots, Re denotes a real part, and Im denotes an imaginary part.

4. The method of one of the claims 1 to 3, wherein when the magnitude of the product of the complex number of the current scattered pilot and the complex number of the previous scattered pilot does not exceed a predetermined threshold value, the result of multiplication of the complex numbers is excluded from accumulation.

5. The method of one of the claims 1 to 4, wherein the timing offset is composed of an integer part and a decimal part, the FFT start point is controlled using the integer part, and the timing of the sampling clock signal is controlled using the decimal part.

6. An orthogonal frequency division multiplex, OFDM, receiving system for performing fast Fourier transform, FFT, on a symbol composed of a useful data sample and a guard interval, the OFDM receiving system comprising:

   an analog-to-digital converter (110) for converting an OFDM signal into digital complex samples;
   an FFT window controller (120) for removing guard interval samples from the digital complex samples output from the analog-to-digital converter to output useful data samples;
   FFT operation means (130) for performing FFT on the useful data samples output from the FFT window controller;
   a scattered pilot extractor 150 for extracting a scattered pilot from a sample output from the FFT operating means; and being **characterised by** :

   a timing offset estimator (160) for complex-multiplying a complex number of the scattered pilot extracted by the scattered pilot extractor by a delayed complex number of a previous scattered pilot, separately accumulating real parts and imaginary parts of the results of complex multiplication during a single symbol period, and estimating a useful data sample start timing offset for the FFT window controller using an accumulation of real parts and a timing offset of a sampling clock signal of the analog-to-digital converter using an accumulation of imaginary parts.

**7.** The system of claim 6, wherein the timing offset estimator comprises:

a multiplier (161) for multiplying a currently received scattered pilot by the sign of a known scattered pilot pattern to calculate a complex number of the scattered pilot;

a delay unit (162) for delaying the complex number of the scattered pilot from the multiplier for a predetermined time;

a complex multiplier (163) for multiplying a complex number of a scattered pilot from the multiplier by a complex number of a scattered pilot from the delay unit;

an accumulator (164, 165) for separately accumulating real parts and imaginary parts of complex numbers calculated by the complex multiplier during a single symbol period; and

a phase estimator (166) for estimating a phase using an accumulation of real parts and an accumulation of imaginary parts which are obtained by the accumulator.

**8.** The system of claim 6 or 7, wherein the timing offset estimator does not accumulate a real part and an imaginary part when the magnitude of the result of complex multiplication does not exceed a predetermined value.

**Patentansprüche**

**1.** Verfahren zum Schätzen eines Symbol-Timing-Offsets in einem OFDM (orthogonal frequency division multiplex) -Empfangssystem, wobei das Verfahren die folgenden Schritte umfasst:

Extrahieren eines verstreuten Piloten, der in regelmäßigen Abtastintervallen in ein Symbol eingefügt wird, aus einem empfangenen OFDM-Signal, wobei das Verfahren **gekennzeichnet ist durch**:

Multiplizieren des aktuellen extrahierten verstreuten Piloten mit dem Vorzeichen eines bekannten Musters verstreuter Piloten, um eine komplexe Zahl des aktuellen verstreuten Piloten zu gewinnen;

Multiplizieren der komplexen Zahl des aktuellen verstreuten Piloten mit einer komplexen Zahl eines vorangegangenen verstreuten Piloten und separates Akkumulieren realer Teile und imaginärer Teile der Ergebnisse der Multiplikation komplexer Zahlen während einer vorgegebenen Symbolperiode; und

Schätzen einer Phase unter Verwendung einer Akkumulation realer Teile und einer Akkumulation imaginärer Teile und Schätzen eines Timing-Offset zum Steuern eines Anfangspunktes schneller Fourier-Transformation unter Verwendung der akkumulierten realen Teile und eines Abtast-Taktsignals unter Verwendung der akkumulierten imaginären Teile.

**2.** Verfahren nach Anspruch 1, wobei das komplexe Signal des aktuellen verstreuten Piloten anhand von $Y_j(k')-X^*_j(k')$ berechnet wird, wobei k' eine Hilfsträgerzahl angibt, die der Position des verstreuten Piloten entspricht, $Y_j(k')$ ein empfangenes Signal eines k-ten Hilfsträgers eines j-ten Symbols angibt, und $X^*_j(k')$ ein gesendetes Signal des k-ten Hilfsträgers des j-ten Symbols angibt.

**3.** Verfahren nach Anspruch 1 oder 2, wobei die Phase mit

$$\tan^{-1}\left\{\frac{\sum_{i=1}^{L-1} Re\{\varphi_i(k'_i)\ \varphi_j^*(k'_{i+1})\}}{\sum_{i=1} Im\{\varphi_i(k'_i)\ \varphi_j^*(k'_{i+1})\}}\right\}$$

geschätzt wird, wobei $\varphi_j(k'_j)$ eine komplexe Zahl angibt, die Phasendrehungsinformationen über einen k'-ten verstreuten Piloten enthält, i eine Zahl des verstreuten Piloten angibt, L eine Gesamtzahl verstreuter Piloten angibt, Re einen realen Teil angibt und Im einen imaginären Teil angibt.

**4.** Verfahren nach einem der Ansprüche 1 bis 3, wobei, wenn der Betrag des Produktes der komplexen Zahl des aktuellen gestreuten Piloten und der komplexen Zahl des vorangegangenen gestreuten Piloten einen vorgegebenen Schwellenwert nicht übersteigt, das Resultat der Multiplikation der komplexen Zahlen aus der Akkumulation ausgeschlossen wird.

**5.** Verfahren nach einem der Ansprüche 1 bis 4, wobei der Timing-Offset aus einem ganzzahligen Teil und einem dezimalen Teil zusammengesetzt ist, der Anfangspunkt der schnellen Fourier-Transformation unter Verwendung des ganzzahligen Teils gesteuert wird und das Timing des Abtast-Taktsignals unter Verwendung des dezimalen Teils gesteuert wird.

**6.** OFDM-Empfangssystem zum Durchführen schneller Fourier-Transformation (FFT) eines Symbols, das aus einem Nutzdaten-Abtastwert und einem Schutzintervall besteht, wobei das OFDM-Empfangssystem umfasst:

einen Analog-Digital-Wandler (110) zum Umwandeln eines OFDM-Signals in digitale komplexe Abtastwerte; eine FFT-Fenster-Steuereinheit (120) zum Entfernen von Schutzintervall-Abtastwerten aus den digitalen komplexen Abtastwerten, die von dem Analog-Digital-Wandler ausgegeben werden, um Nutzdaten-Abtastwerte auszugeben; eine FFT-Operationseinrichtung (130) zum Durchführen schneller Fourier-Transformation an den Nutzdaten-Abtastwerten, die von der FFT-Operationseinrichtung ausgegeben werden; und **gekennzeichnet durch**:

eine Timing-Offset-Schätzeinrichtung (160) zum komplexen Multiplizieren einer komplexen Zahl der **durch** die Einrichtung zum Extrahieren verstreuter Piloten extrahierten Piloten mit einer verzögerten komplexen Zahl eines vorangegangenen verstreuten Piloten, zum separaten Akkumulieren realer Teile und imaginärer Teile der Ergebnisse komplexer Multiplikation während einer einzelnen Symbolperiode, und zum Schätzen eines Timing-Offset eines Anfangs der Abtastung der Nutzdaten für die FFT-Fenster-Steuerung unter Verwendung einer Akkumulation realer Teile und eines Timing-Offset eines Abtast-Taktsignals des Analog-DigitalWandlers unter Verwendung einer Akkumulation imaginärer Teile.

**7.** System nach Anspruch 6, wobei die Timing-Offset-Schätzeinrichtung umfasst:

eine Multipliziereinrichtung (161) zum Multiplizieren eines aktuell empfangenen verstreuten Piloten mit dem Vorzeichen eines bekannten Musters verstreuter Piloten, um eine komplexe Zahl des verstreuten Piloten zu berechnen; eine Verzögerungseinheit (162) zum Verzögern der komplexen Zahl des verstreuten Piloten von der Multipliziereinrichtung um eine vorgegebene Zeit; eine Einrichtung (163) zum komplexen Multiplizieren, die eine komplexe Zahl eines verstreuten Piloten von der Multipliziereinrichtung mit einer komplexen Zahl eines verstreuten Piloten von der Verzögerungseinheit multipliziert; einen Akkumulator (164, 165) zum separaten Akkumulieren realer Teile und imaginärer Teile durch die Einrichtung zum komplexen Multiplizieren berechneter komplexer Zahlen während einer einzelnen Symbolperiode; und eine Phasen-Schätzeinrichtung (166) zum Schätzen einer Phase unter Verwendung einer Akkumulation realer Teile und einer Akkumulation imaginärer Teile, die durch die Akkumuliereinrichtung gewonnen werden.

**8.** System nach Anspruch 6 oder 7, wobei die Timing-Offset-Schätzeinrichtung einen realen Teil und einen imaginären Teil nicht akkumuliert, wenn der Betrag des Ergebnisses komplexer Multiplikation einen vorgegebenen Wert nicht übersteigt.

**Revendications**

**1.** Procédé d'estimation d'un décalage de synchronisation de symbole dans un système de réception à multiplexage par répartition en fréquences orthogonales, OFDM, le procédé comprenant les étapes consistant à :

extraire un pilote diffusé, qui est inséré dans un symbole à intervalles d'échantillonnage réguliers, d'un signal OFDM reçu, le procédé étant **caractérisé par** la multiplication du pilote diffusé extrait actuel par le signe d'un modèle de pilote diffusé connu afin d'obtenir un nombre complexe du pilote diffusé actuel ; la multiplication du nombre complexe du pilote diffusé actuel par un nombre complexe d'un pilote diffusé précédent et cumuler séparément des parties réelles et des parties imaginaires des résultats de la multiplication de nombres complexes sur une période de symbole prédéterminée ; et l'estimation d'une phase à l'aide d'une accumulation de parties réelles et une accumulation de parties imaginaires et estimer un décalage de synchronisation afin de contrôler une transformée de Fourier rapide, FFT, un point de départ à l'aide des parties réelles cumulées et un signal d'horloge d'échantillonnage à l'aide des parties imaginaires cumulées.

**2.** Procédé selon la revendication 1, dans lequel le signal complexe du pilote diffusé actuel est calculé à partir de $Y_j(k') \cdot X_j^o(k')$ , dans lequel $k'$ représente un nombre de la sous-porteuse correspondant à la position du pilote diffusé, $Y_j(k')$ représente un signal reçu d'une sous-porteuse k-th d'un symbole j-th, et représente un signal transmis de la sous-porteuse k-th du symbole j-th.

**3.** Procédé selon la revendication 1 ou 2, dans lequel la phase est estimée par $\tan^{-1}\left\{ \dfrac{\sum\limits_{i=1}^{L-1} \mathrm{Re}\left\{\varphi_j(k_i') \cdot \varphi_j^o(k_{i+1}')\right\}}{\sum\limits_{i=1}^{L-1} \mathrm{Im}\left\{\varphi_j(k_i') \cdot \varphi_j^o(k_{i+1}')\right\}} \right\}$ ,

dans lequel $\varphi_j(k_i')$ représente un nombre complexe contenant des informations de rotation de phase sur un pilote diffusé k'-th, i représente un nombre de pilote diffusé, L représente un total de pilotes diffusés, Re représente une partie réelle, et Im représente une partie imaginaire.

**4.** Procédé selon l'une quelconque des revendications 1 à 3, dans lequel lorsque l'amplitude du produit du nombre complexe du pilote diffusé actuel et le nombre complexe du pilote diffusé précédent ne dépasse pas une valeur de seuil prédéterminée, le résultat de la multiplication des nombres complexes est exclu de l'accumulation.

**5.** Procédé selon l'une quelconque des revendications 1 à 4, dans lequel le décalage de synchronisation est composé d'une partie entière et d'une partie décimale, le point de départ FFT est contrôlé à l'aide de la partie entière, et la synchronisation du signal d'horloge d'échantillonnage est contrôlée à l'aide de la partie décimale.

**6.** Système de réception à multiplexage par répartition de fréquences orthogonales, OFDM, pour effectuer une transformée de Fourier rapide, FFT, sur un symbole composé d'un échantillon de données utiles et d'un intervalle de garde, le système de réception OFDM comprenant :

un convertisseur analogique-numérique (110) pour convertir un signal OFDM en des échantillons complexes numériques

un contrôleur de fenêtre FFT (120) pour supprimer des échantillons d'intervalle de garde des échantillons complexes numériques fournis par le convertisseur anologique-numérique afin d'émettre en sortie des échantillons de données utiles ;

des moyens d'opération FFT (130) pour effectuer une FFT sur les échantillons de données utiles fournis par le contrôleur de fenêtre FFT ;

un extracteur de pilote diffusé (150) pour extraire un pilote diffusé d'un échantillon fourni par les moyens d'opération FFT ; et étant **caractérisé par** :

un dispositif d'estimation de décalage de synchronisation (160) pour une multiplication complexe d'un nombre complexe du pilote diffusé, extrait par l'extracteur de pilote diffusé, par un nombre complexe différé d'un pilote diffusé précédent, pour une accumulation séparée de parties réelles et de parties imaginaires des résultats de la multiplication complexe sur une période de symbole unique, et pour une estimation d'un décalage de synchronisation de départ d'échantillon de données utiles pour le contrôleur de fenêtre FFT à l'aide d'une accumulation de parties réelles et un décalage de synchronisation d'un signal d'horloge d'échantillonnage du convertisseur analogique-numérique à l'aide d'une accumulation de parties imaginaires.

**7.** Système selon la revendication 6, dans lequel le dispositif d'estimation de décalage de synchronisation comprend :

un multiplicateur (161) pour multiplier un pilote diffusé reçu actuellement par le signe d'un modèle de pilote diffusé connu afin de calculer un nombre complexe du pilote diffusé ;

une unité de retard (162) pour retarder le nombre complexe du pilote diffusé du multiplicateur sur une durée prédéterminée ;

un multiplicateur complexe (163) pour multiplier un nombre complexe d'un pilote diffusé du multiplicateur par un nombre complexe d'un pilote diffusé de l'unité de retard ;

un accumulateur (164, 165) pour cumuler séparément des parties réelles et des parties imaginaires de nombres complexes calculés par le multiplicateur complexe sur une période de symbole unique ; et

un dispositif d'estimation de phase (166) pour estimer une phase à l'aide d'une accumulation de parties réelles et d'une accumulation de parties imaginaires qui sont obtenues par l'accumulateur.

8. Système selon la revendication 6 ou 7, dans lequel le dispositif d'estimation de décalage de synchronisation ne cumule pas une partie réelle et une partie imaginaire lorsque l'amplitude du résultat de la multiplication complexe ne dépasse pas une valeur prédéterminée.

# FIG. 1

EP 1 267 535 B1

# FIG. 2

```
                    START

            RECEIVE OFDM SIGNAL        —210

            EXTRACT SCATTERED PILOT    —220

            ESTIMATE PHASE ROTATION
            OF SCATTERED PILOT         —230

         PERFORM COMPLEX MULTIPLICATION
         ON ADJACENT SCATTERED PILOTS  —240

       SEPARATELY ACCUMULATE REAL PARTS
         AND IMAGINARY PARTS OF COMPLEX  —250
       PRODUCTS DURING SINGLE SYMBOL PERIOD

            ESTIMATE SYMBOL TIMING
            OFFSET USING ACCUMULATIONS  —260

                     END
```

# FIG. 3A

# FIG. 3B

# FIG. 4

FIG. 5